# EUROPÄISCHE PATENTSCHRIFT

(11) **EP 2 655 138 B1**
(45) Veröffentlichungstag und Bekanntmachung des Hinweises auf die Patenterteilung: **17.12.2014**
(21) Anmeldenummer: 11808591.9
(22) Anmeldetag: 21.12.2011
(51) Int. Cl.: B60R 25/00, E05F 15/00, E05F 15/20

(54) **VERFAHREN ZUM AUTOMATISCHEN BETÄTIGEN EINES SCHLIESSELEMENTS EINES FAHRZEUGS SOWIE ENTSPRECHENDE VORRICHTUNG UND FAHRZEUG**
METHOD FOR AUTOMATICALLY ACTUATING A CLOSING ELEMENT OF A VEHICLE, AND CORRESPONDING DEVICE AND VEHICLE
PROCÉDÉ D'ACTIONNEMENT AUTOMATIQUE D'UN ÉLÉMENT DE FERMETURE D'UN VÉHICULE AINSI QUE DISPOSITIF CORRESPONDANT ET VÉHICULE

(30) Priorität: 24.12.2010 DE 102010056171
(43) Veröffentlichungstag der Anmeldung: 30.10.2013
(60) Teilanmeldung: 14181396.4
(73) Patentinhaber: Volkswagen Aktiengesellschaft, 38436 Wolfsburg (DE)
(72) Erfinder: ETTE, Bernd, 38442 Wolfsburg (DE)
(86) Internationale Anmeldenummer: PCT/EP2011/006469
(87) Internationale Veröffentlichungsnummer: WO 2012/084222

(56) Entgegenhaltungen:
- EP-A2- 1 956 170
- WO-A2-2008/116699
- DE-A1-102008 025 669
- US-A1- 2002 118 114

## Beschreibung

Die vorliegende Erfindung betrifft ein Verfahren, um ein Schließelement eines Fahrzeugs, beispielsweise eine Schiebetür, automatisch zu öffnen und/oder zu schließen, sowie eine entsprechend ausgestaltete Vorrichtung und ein entsprechend ausgestaltetes Fahrzeug.

Die EP 1 956 170 A2 beschreibt ein Verfahren zum automatischen Betätigen eines Schließelements gemäß dem Oberbegriff von Anspruch 1.

Die DE 10 2008 025 669 A1 offenbart einen optischen Sensor, welcher eine Geste detektiert, woraufhin ein Schließelement eines Fahrzeugs automatisch bewegt wird. Darüber hinaus offenbart diese Druckschrift ein Hindernisdetektionsmittel, um das Vorhandensein eines Hindernisses innerhalb eines Bewegungsbereichs des Schließelements zu detektieren.

Die WO 2008/116699 A2 betrifft einen optischen Sensorchip und bezieht sich auf eine optische Einklemmschutzvorrichtung für die Überwachung einer Fensterscheibe, Schiebetür oder einer Heckklappe in einem Kraftfahrzeug mit einem solchen Sensorchip.

Nach dem Stand der Technik erfolgt ein Öffnen einer Schiebetür eines Fahrzeugs beispielsweise mittels eines kapazitiven Türgriffsensors, wobei nachteiligerweise häufig ein zweimaliges Hineingreifen in den Entriegelungssensor (Türgriff) notwendig ist, da das Türschloss der Schiebetür nicht rechtzeitig entriegelt werden kann. Ein Schutz beispielsweise der Fahrertür vor einer Kollision mit Hindernissen wird nach dem Stand der Technik meist mittels Ultraschallsensoren realisiert, was eine relativ teure Lösung darstellt.

Die vorliegende Erfindung stellt sich daher die Aufgabe, die Bedienung eines Schließelements (insbesondere einer Tür) eines Fahrzeugs komfortabler und/oder einen Kollisionsschutz des Schließelements preiswerter im Vergleich zum Stand der Technik auszugestalten.

Erfindungsgemäß wird diese Aufgabe durch ein Verfahren zum automatischen Betätigen eines Schließelements eines Fahrzeugs nach Anspruch 1, durch eine Vorrichtung zum automatischen Betätigen eines Schließelements eines Fahrzeugs nach Anspruch 9 oder durch ein Fahrzeug nach Anspruch 12 gelöst. Die abhängigen Ansprüche definieren bevorzugte und vorteilhafte Ausführungsformen der vorliegenden Erfindung.

Im Rahmen der vorliegenden Erfindung wird ein Verfahren zum automatischen Betätigen (insbesondere Öffnen und Schließen) eines Schließelements eines Fahrzeugs bereitgestellt. Dabei wird mit Hilfe eines optischen Sensors ein Objekt (insbesondere eine Bewegung dieses Objekts) erfasst. Abhängig von der Erfassung des Objekts oder der Bewegung wird das Schließelement betätigt. Mit demselben optischen Sensor wird darüber hinaus überprüft, ob sich bei der Betätigung des Schließelements ein Hindernis in einer Bewegungsbahn des Schließelements befindet. Die Betätigung des Schließelements wird unterbrochen, wenn der optische Sensor ein Hindernis in dieser Bewegungsbahn des Schließelements erfasst.

Unter der Bewegungsbahn des Schließelements wird dabei eine Bahn oder ein Weg verstanden, auf welchem sich das Schließelement beim Öffnen oder beim Schließen des Schließelements bewegt. Unter einer Unterbrechung der Betätigung des Schließelements wird insbesondere verstanden, dass eine weitere Bewegung des Schließelements in eine Richtung, in welche sich das Schließelement während der aktuellen Betätigung bewegt, verhindert wird. Beispielsweise wird die Bewegung des Schließelements vollständig gebremst oder gar umgekehrt, bevor das Schließelement mit einem Hindernis in seiner Bewegungsbahn zusammenstößt.

Durch den Einsatz des optischen Sensor sowohl zur Initiierung der Betätigung des Schließelements als auch zur Erfassung des Hindernisses in der Bewegungsbahn des Schließelements, kann vorteilhafterweise derselbe Sensor für zwei unterschiedliche Aufgaben eingesetzt werden. Dadurch kann vorteilhafterweise ein Kollisionsschutz des Schließelements preiswerter realisiert werden, als es nach dem Stand der Technik, bei welchem in der Regel Ultraschallsensoren zum Kollisionsschutz eingesetzt werden, der Fall ist. Darüber hinaus kann auf den Einsatz von kapazitiven Sensoren in einem Türgriff verzichtet werden, was gerade bei verchromten Türgriffen, in welchen kapazitive Sensoren nicht einsetzbar. sind, von Vorteil ist.

Insbesondere wird das Schließelement nur dann betätigt, wenn gleichzeitig ein dem Fahrzeug zugeordneter Fahrzeugschlüssel im Umfeld des Fahrzeugs beispielsweise von einem Keyless-Entry-System erfasst wird.

-Diese Überprüfung, ob ein dem Fahrzeug zugeordneter Schüssel erfasst wird, kann beispielsweise dann erfolgen, wenn mittels des optischen Sensors erfasst wird, dass sich ein Objekt (beispielsweise eine Hand) bis auf einen vorbestimmten Abstand einem Griff des Schließelements genähert hat.

Durch den Einsatz des optischen Sensors zur Initiierung der Erfassung eines dem Fahrzeug zugeordneten Schlüssels kann bereits dann, wenn sich beispielsweise eine Hand 30 cm oder sogar erst 40 cm vor dem entsprechenden Griff des Schließelements befindet, versucht werden, einen dem Fahrzeug zugeordneten Schlüssel zu erfassen. Im Vergleich zum Stand der Technik, bei welchem zu diesem Zweck in der Regel kapazitive Sensoren eingesetzt werden, welche meist erst bei einer Annäherung auf 5 cm (bedingt durch die geringe Reichweite von kapazitiven Sensoren) ansprechen, kann der Versuch, einen dem Fahrzeug zugeordneten Schlüssel zu erfassen, zeitlich früher durchgeführt werden. Im Erfolgsfall (d.h. ein dem Fahrzeug zugeordneter Schlüssel wird erfasst) führt diese zeitlich frühere Durchführung der Schlüsselerfassung vorteilhafterweise zu einer rascheren Reaktion des Schließelements, so dass das Schließelement beispielsweise zeitlich eher geöffnet werden kann, als dies beim Einsatz von kapazitiven Sensoren der Fall ist.

Das Schließelement kann beispielsweise automatisch geöffnet werden, wenn eine von folgenden Bedingungen erfüllt wird:
- Ein Griff des Schließelements wird berührt, was ebenfalls mit Hilfe des optischen Sensors erfasst werden kann.
- Eine Wischgeste wird von dem optischen Sensor erfasst.
- Der optische Sensor erfasst, dass eine Person über eine vorbestimmte Zeitspanne hinweg vor dem Schließelement steht.

Um beispielsweise eine Schiebetür (als Schließelement) auch ohne Benutzung der Hände öffnen zu können, erfasst der optische Sensor nicht nur die Annäherung eines Objekts (z.B. einer Hand), sondern erfasst ebenfalls eine Person, welche im entsprechenden Erfassungsbereich des optischen Sensors stehen bleibt. Hierzu wird beispielsweise ein Arm der Person oder eine Schulter der Person detektiert. Wenn die Person eine vorher festgelegte Zeitspanne (zum Beispiel 2 s) an einer Stelle verweilt, fordert der optische Sensor die Suche nach einem dem Fahrzeug zugeordneten Schlüssel an. Wird dieser Schlüssel daraufhin gefunden, öffnet sich die Schiebetür automatisch.

Neben der Öffnung des Schließelements ohne Benutzung der Hände kann das Schließelement geöffnet werden, indem sich beispielsweise eine Hand einem Umgebungskreis eines Griffs des Schließelements (zum Beispiel des Türgriffs einer Fahrertür oder einer Schiebetür) annähert. Darüber hinaus kann ein Schließelement erfindungsgemäß geöffnet werden, indem mit der Hand vor dem optischen Sensor (im Erfassungsbereich des optischen Sensors) gewischt wird.

Die Betätigung (d.h. das Öffnen oder Schließen) des Schließelements, beispielsweise einer Klappe des Fahrzeugs, wird unterbrochen, wenn eine von folgenden Bedingungen erfüllt ist:
- Eine Person, welche an dem Schließelement in einem geringeren als einem vorbestimmten Abstand vorbei läuft, wird von dem optischen Sensor erfasst.
- Ein Einsteigen einer Person in das Fahrzeug wird von dem optischen Sensor erfasst.
- Ein Aussteigen einer Person aus dem Fahrzeug wird von dem optischen Sensor erfasst.
- Ein Annähern von einem ersten Objekt bis auf einen vorbestimmten Abstand an einem Griff des Schließelements und ein gleichzeitiges Annähern eines zweiten Objekts an einen Griff eines weiteren Schließelements des Fahrzeugs werden von demselben optischen Sensor erfasst.

Mit anderen Worten wird gemäß dieser erfindungsgemäßen Ausführungsform eine Heckklappe oder ein anderes Schließelement des Fahrzeugs nicht automatisch geöffnet oder geschlossen, wenn eine Person in das Fahrzeug einsteigt oder aus dem Fahrzeug aussteigt. Darüber hinaus kann das Öffnen oder Schließen eines Schließelements unterbrochen werden, indem zwei Türgriffe von unterschiedlichen Türen (beispielsweise einer Schiebetür und einer Fahrertür) berührt werden.

Gemäß einer erfindungsgemäßen Ausführungsform wird das Schließen eines Schließelements beispielsweise durch eine entsprechende Geste oder durch die Berührung eines entsprechenden Bedienelements initiiert. Das Schließelement wird gemäß dieser Ausführungsform allerdings erst dann automatisch geschlossen, wenn der optische Sensor außerhalb des Fahrzeugs kein Objekt mehr in einem vorbestimmten Abstand von dem optischen Sensor erfasst.

Dadurch ist es beispielsweise möglich, zuerst den Schließbefehl für das Schließelement zu geben und anschließend bestimmte Objekte im Fahrzeug (beim Entladen des Fahrzeugs) aufzunehmen. Das Schließelement (beispielsweise eine Schiebetür oder eine Heckklappe) schließt sich erst dann automatisch, wenn man sich weit genug von dem Schließelement bzw. von dem optischen Sensor entfernt hat.

Mit Hilfe des optischen Sensors können auch bestimmte Informationen bei der automatischen Betätigung des Schließelements ermittelt werden. Zu diesen Informationen gehören:
- Ein Öffnungsgrad des Schließelements. Dabei gibt der Öffnungsgrad an, zu wie viel Prozent das Schließelement geöffnet bzw. geschlossen ist.
- Eine Information darüber, ob sich das Schließelement in einer Endlage befindet. Beispielsweise eine Schiebetür weist zwei Endlagen auf. In einer Endlage ist die Schiebetür vollständig geschlossen und in einer anderen Endlage ist die Schiebetür vollständig geöffnet.
- Eine Geschwindigkeit, mit welcher sich das Schließelement beim Öffnen oder beim Schließen bewegt.

Diese entsprechenden Informationen können als Statusinformationen über ein Bussystem an entsprechende Steuereinrichtungen des Fahrzeugs weitergeleitet werden. Durch den Einsatz des optischen Sensors zur Ermittlung dieser Informationen können Sensoren, welche heutzutage diese Informationen ermitteln, vorteilhafterweise eingespart werden. Beispielsweise können Endlagenschalter bezüglich einer Schiebetür eingespart werden. Die Verfahrgeschwindigkeit einer Schiebetür kann beispielsweise mit Hilfe des optischen Sensors, welcher sich z.B. am Rand der Schiebetür befindet, dadurch bestimmt werden, dass ein Abstand der Schiebetür von einer Türbegrenzung (zum Beispiel der B-Säule) über der Zeit gemessen wird.

Erfindungsgemäß kann das Schließelement eine Fahrertür des Fahrzeugs, eine Beifahrertür (d.h. irgendeine andere Tür) des Fahrzeugs, eine Schiebetür oder eine Klappe (z.B. die Heckklappe) des Fahrzeugs umfassen.

Darüber hinaus weist der optische Sensor zwei verschiedene Erfassungsbereiche auf. Zur Betätigung des Schließelements erfasst der optische Sensor das Objekt oder eine Bewegung des Objekts in einem ersten Erfassungsbereich. Ob sich bei der Betätigung des Schließelements ein Hindernis in der Bewegungsbahn des Schließelements befindet, überprüft der optische Sensor dadurch, dass er überprüft, ob sich in einem zweiten Erfassungsbereich ein entsprechendes Hindernis befindet. Dabei befinden sich der erste und der zweite Erfassungsbereich ausgehend von dem optischen Sensor in unterschiedlichen Richtungen.

Im Rahmen der vorliegenden Erfindung wird auch eine Vorrichtung zum automatischen Betätigen eines Schließelements eines Fahrzeugs bereitgestellt. Dabei umfasst die Vorrichtung Steuermittel und einen optischen Sensor. Mit Hilfe des optischen Sensors wird ein Objekt (insbesondere eine Bewegung dieses Objekts) erfasst und überprüft, ob sich bei der Betätigung des Schließelements ein Hindernis in einer Bewegungsbahn des Schließelements befindet. Abhängig von der Erfassung des Objekts betätigen die Steuermittel das Schließelement und unterbrechen diese Betätigung, wenn mit Hilfe des optischen Sensors ein Hindernis in der Bewegungsbahn des Schließelements erfasst wird.

Die Vorteile der erfindungsgemäßen Vorrichtung entsprechen im Wesentlichen den Vorteilen des erfindungsgemäßen Verfahrens, welche vorab im Detail ausgeführt worden sind, so hier auf eine Wiederholung verzichtet wird.

Gemäß einer erfindungsgemäßen Ausführungsform umfasst die Vorrichtung zusätzlich einen kapazitiven Sensor, welcher zur Unterstützung des optischen Sensors bei der Betätigung des Schließelements beispielsweise an einem Griff des Schließelements angeordnet ist.

Durch diesen insbesondere integrierten kapazitiven Sensor kann das Schließelement vorteilhafterweise auch bei einem verschneiten Fahrzeug betätigt werden. Sobald sich beispielsweise Schnee auf den optischen Sensor legt, ist die Einsatzfähigkeit des optischen Sensor zumindest vermindert. Da der kapazitive Sensor auch im verschneiten Zustand einsetzbar ist, stellt er vorteilhafterweise eine gute Ergänzung des optischen Sensors bei der automatischen Betätigung des oder der Schließelemente dar.

Schließlich wird im Rahmen der vorliegenden Erfindung ein Fahrzeug bereitgestellt, welches eine erfindungsgemäße Vorrichtung umfasst.

Gemäß einer erfindungsgemäßen Ausführungsform des Fahrzeugs ist das Schließelement eine Schiebetür, welche von der B-Säule des Fahrzeugs begrenzt wird. Der optische Sensor ist bei dieser Ausführungsform an dem Rand der Schiebetür angeordnet, welcher sich bei einer geschlossenen Schiebetür direkt neben der B-Säule befindet. Bei geöffneter Schiebetür umfasst ein Erfassungsbereich des optischen Sensors einen Bereich, welcher sich von dem Rand der Schiebetür bis zur B-Säule erstreckt.

Da der optische Sensor vorteilhafterweise an der sich bewegenden Schiebetür angebracht ist und sich sein Erfassungsbereich bis zu der B-Säule erstreckt, können mit Hilfe des optischen Sensors die bereits vorab beschriebenen Statusinformationen (Öffnungsgrad; Endlageinformation und Verfahrgeschwindigkeit der Schiebetür) sehr gut ermittelt werden.

Es sei darauf hingewiesen, dass die vorliegende Erfindung zumindest zum Schließen oder Verriegeln von Schließelementen und als Kollisionsschutz auch bei Fahrzeugen ohne ein Keyless-Entry-System (d.h. ohne ein System, welches einen dem Fahrzeug zugeordneten Funkschlüssel erfassen kann) eingesetzt werden kann.

Als optischer Sensor kann beispielsweise ein Sensor eingesetzt werden, welcher Bewegungen und Gesten in einem Raumwinkel von ± 85° erfassen kann. Ein solcher Sensor besitzt ein Array von Avalanche-Photodioden. Über ein Impulsmessverfahren können mittels des optischen Sensors Abstände von Objekten detektiert werden. Der Sensor besitzt eine Laserdiode zum Aussenden von diffusem Licht, welches zur Abstandsmessung von Abständen zwischen einem Objekt und dem optischen Sensor und zur Ausleuchtung der Umgebung eingesetzt wird. Ein solcher optischer Sensor weist richtungsorientierte Erfassungsbereiche auf, welche eine genaue Bewegungserkennung ermöglichen.

Die vorliegende Erfindung weist folgende Vorteile auf:
- Ein automatisches Öffnen und Schließen von Schiebetüren kann auch ohne Einsatz der Hände initiiert werden.
- Die Reaktionsgeschwindigkeit beim Öffnen des Fahrzeugs über einen Türgriff wird erhöht.
- Durch Einsparung von z.B. Mikroschaltern, Hallsensoren zur Darstellung bzw. Bestimmung des Status der Schiebetür können Herstellungskosten eingespart werden.
- Neben der Betätigung von Schließelementen kann der optische Sensor zum Kollisionsschutz von anderen oder denselben Schließelementen eingesetzt werden.
- Ein automatisches Schließen aller Türen erst nach erfolgreicher Entladung des Fahrzeugs ist möglich.

Die vorliegende Erfindung ist insbesondere zur automatischen Betätigung von Schiebetüren eines Kraftfahrzeugs geeignet. Selbstverständlich ist die vorliegende Erfindung nicht auf diesen bevorzugten Anwendungsbereich eingeschränkt, da die vorliegende Erfindung zum einen auch zur automatischen Betätigung von anderen Schließelementen (beispielsweise von Klappen und normalen Türen) eingesetzt werden kann. Zum anderen kann die vorliegende Erfindung auch bei Schiffen, Flugzeugen sowie gleisgebundenen und spurgeführten Fahrzeugen eingesetzt werden.

Im Folgenden wird die vorliegende Erfindung anhand bevorzugter erfindungsgemäßer Ausführungsformen mit Bezug zu den Figuren im Detail beschrieben.
- In Fig. 1: ist ein erfindungsgemäßes Fahrzeug mit einem optischen Sensor, welcher zwei unterschiedliche Erfassungsbereiche aufweist, dargestellt.
- Fig. 2: zeigt einen Erfassungsbereich eines erfindungsgemäß eingesetzten optischen Sensors.
- Fig. 3: zeigt schematisch ein erfindungsgemäßes Fahrzeug mit einer erfindungsgemäßen Vorrichtung.

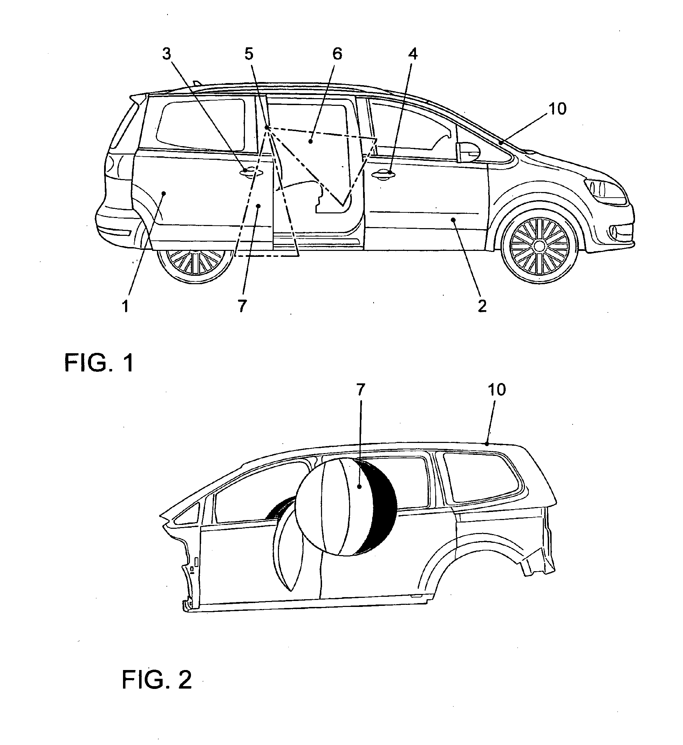

In Fig. 1 ist ein erfindungsgemäßes Fahrzeug 10 dargestellt, welches eine Schiebetür 1 und eine Beifahrertür 2 aufweist. An der Schiebetür 1 ist an demjenigen Rand, welcher bei geschlossener Schiebetür 1 an die B-Säule des Fahrzeugs 10 angrenzt, ein optischer Sensor 5 angebracht. Bei geschlossener Schiebetür 1 überwacht der optische Sensor 5 mit seinem, ersten Erfassungsbereich 7 sowohl den Griff 3 der Schiebetür als auch den Griff 4 der Beifahrertür 2.

Erkennt der optische Sensor 5 bei geschlossener Schiebetür, dass sich dem Griff 3 der Schiebetür 1 eine Hand nähert, wird eine Schlüsselerkennung aktiviert, um über ein Keyless-Entry-System (nicht dargestellt) einen dem Fahrzeug zugeordneten Schlüssel oder Chip zu erfassen. Wenn ein solcher Schlüssel erfasst wird, wird die Schiebetür 1 automatisch geöffnet wird. Bei einer Berührung des Griffs der Fahrertür (nicht dargestellt) wird das gesamte Fahrzeug 10 entriegelt.

Ein Schließvorgang der Schiebetür 1 kann beispielsweise über eine Wischgeste (z.B. eine mit einer Hand ausgeführte virtuelle Schleife bzw. Schlaufe) im ersten Erfassungsbereich 7 des optischen Sensors angefordert werden. Erkennt der optische Sensor 5 diese Wischgeste, wird der zweite Erfassungsbereich 6 des optischen Sensors 5 aktiviert. Damit überwacht der optische Sensor den offenen Türausschnitt der Schiebetür 1. Befinden sich Objekte, beispielsweise eine Person, innerhalb dieses Türausschnitts, wird das Schließen der Schiebetür 1 noch nicht durchgeführt. Erst wenn der Türausschnitt als frei erkannt wird, wird der Schließvorgang der Schiebetür 1 durchgeführt. Während der Durchführung des Schließvorgangs (d.h. während der Bewegung der Schiebetür 1) wird der offene Türausschnitt oder Türbereich permanent überwacht. Wird dabei ein Objekt in diesem Türbereich erfasst (beispielsweise indem eine Person in diesen Türbereich hinein greift) wird das Schließen bzw. die Bewegung der Schiebetür 1 sofort gestoppt. Anders ausgedrückt wird mittels des optischen Sensors 5 der Türausschnitt der Schiebetür 1 vor und während des Schließvorgangs erfasst, um dadurch einen vorgelagerten Einklemmschutz zu gewährleisten.

Mit Hilfe des optischen Sensors 5 können auch Abstände zu Objekten erfasst werden, welche sich vor der Beifahrertür 2 befinden. Bei einer Öffnung der Beifahrertür 2 von innen, kann somit beispielsweise eine Türbremse angesteuert werden, wenn über den optischen Sensor 5 erfasst wird, dass das sich ein Hindernis in der Bewegungsbahn, welche beim Öffnen von der Beifahrertür 2 durchlaufen wird, befindet. Durch den optischen Sensor 5 können somit auch Objekte, welche seitlich vom Fahrzeug beabstandet sind, erfasst werden.

In einem Zustand, in welchem alle Türen 1, 2 des Fahrzeugs 10 geschlossen sind, kann das Fahrzeug 10 verriegelt werden, indem der optische Sensor 5 berührt wird oder indem innerhalb des ersten Erfassungsbereichs 7 des optischen Sensors 5 eine entsprechende Wischgeste ausgeführt wird.

Es sei darauf hingewiesen, dass das in Fig. 1 dargestellte Fahrzeug 10 auf beiden Seiten jeweils einen optischen Sensor 5 aufweist. Damit überwacht der optische Sensor, welcher auf der dem Betrachter der Fig. 1 abgewandten Seite des Fahrzeugs 10 angeordnet ist, in derselben Weise die Fahrertür des Fahrzeugs 10, wie der in Fig. 1 sichtbare optische Sensor 5 die Beifahrertür 2 überwacht. Darüber hinaus sei darauf hingewiesen, dass die Bedienung der Schiebetür 1 ausschließlich über den im Türrahmen angeordneten optischen Sensor 5 erfolgt, so dass dieser optische Sensor 5 für das Verfahren und Stoppen der Schiebetür 1 üblicherweise benötigte Mikroschalter und Hallsensoren ersetzt. Der erfindungsgemäße Einsatz des optischen Sensors 5 ist für alle mechanischen, elektrischen Schiebetüren 1 möglich.

In Fig. 2 ist der Erfassungsbereich 7 des optischen Sensors dargestellt. Der Erfassungsbereich 7 weist die Form eines Kugelsegments auf, welches ausgehend von dem optischen Sensor einen Radius von ca. 50 cm (oder einen Radius von 30 - 70 cm) aufweist und einen Raumwinkel von ca. ±85° überstreicht. Innerhalb dieses Erfassungsbereichs 7 können Gesten oder Handgriffe automatisch erkannt werden, wie es vorab näher erläutert ist.

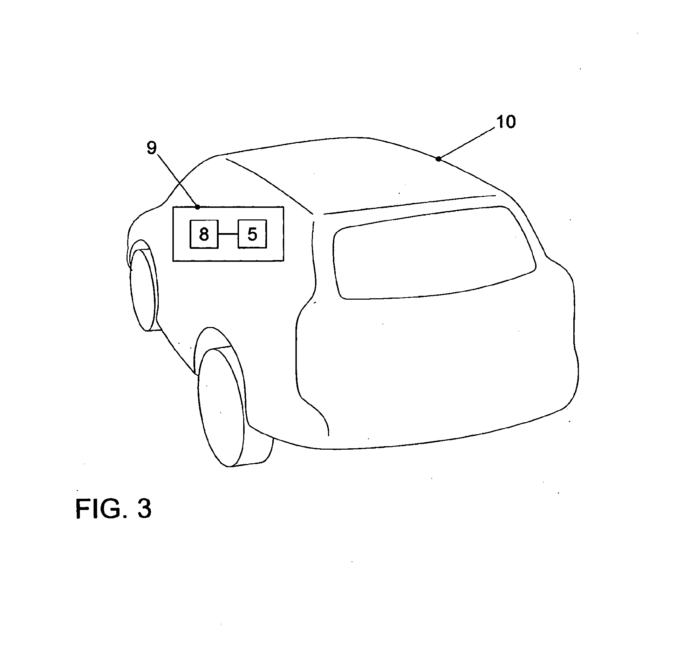

In Fig. 3 ist schematisch ein erfindungsgemäßes Fahrzeug 10 dargestellt, welches eine erfindungsgemäße Vorrichtung 9 umfasst. Die erfindungsgemäße Vorrichtung 9 umfasst ihrerseits einen optischen Sensor 5 und ein Steuermittel 8.

## Patentansprüche

1. Verfahren zum automatischen Betätigen eines Schließelements (1; 2) eines Fahrzeugs (10),
wobei mittels eines optischen Sensors (5) ein Objekt erfasst wird,
wobei abhängig von der Erfassung des Objekts das Schließelement (1; 2) betätigt wird, wobei mit dem optischen Sensor (5) überprüft wird, ob sich bei der Betätigung des Schließelements (1; 2) ein Hindernis in einer Bewegungsbahn des Schließelements (1; 2) befindet, und
wobei die Betätigung des Schließelements (1; 2) unterbrochen wird, wenn der optische Sensor (5) ein Hindernis in der Bewegungsbahn des Schließelements (1; 2) erfasst, **dadurch gekennzeichnet,**
**dass** mittels des optischen Sensors (5) das Objekt in einem ersten Erfassungsbereich (7) erfasst wird,
**dass** mit dem optischen Sensor in einem zweiten Erfassungsbereich (6) überprüft wird, ob sich bei der Betätigung des Schließelements (1; 2) ein Hindernis in der Bewegungsbahn des Schließelements (1; 2) befindet, und
**dass** der erste Erfassungsbereich (7) und der zweite Erfassungsbereich (6) in unterschiedliche Richtungen orientiert sind.

2. Verfahren nach einem der vorhergehenden Ansprüche, **dadurch gekennzeichnet, dass** das Schließelement (1; 2) nur betätigt wird, wenn gleichzeitig ein dem Fahrzeug (10) zugeordneter Fahrzeugschlüssel in einem Umgebungsbereich des Fahrzeugs (10) erfasst wird.

3. Verfahren nach Anspruch 2, **dadurch gekennzeichnet, dass** überprüft wird, ob der dem Fahrzeug (10) zugeordnete Schlüssel erfasst wird, wenn mit dem optischen Sensor (5) erfasst wird, dass sich das Objekt bis auf einen vorbestimmten Abstand einem Griff (3; 4) des Schließelements (1; 2) genähert hat.

4. Verfahren nach einem der vorhergehenden Ansprüche, **dadurch gekennzeichnet, dass** das Schließelement (1; 2) automatisch geöffnet wird, wenn mindestens eine von folgenden Bedingungen erfüllt wird:
• ein Griff (3; 4) des Schließelements (1; 2) wird berührt,
• eine Wischgeste wird von dem optischen Sensor (5) erfasst, und
• eine Person wird über eine vorbestimmte Zeitspanne hinweg stehend von dem optischen Sensor (5) vor dem Schließelement (1; 2) erfasst.

5. Verfahren nach einem der vorhergehenden Ansprüche, **dadurch gekennzeichnet, dass** die Betätigung des Schließelements (1; 2) unterbrochen wird, wenn mindestens eine von folgenden Bedingungen erfüllt wird:
• eine Person, welche an dem Schließelement (1; 2) mit einem geringeren als einem vorbestimmten Abstand vorbeiläuft, wird von dem optischen Sensor (5) erfasst,
• ein Einsteigen einer Person in das Fahrzeug (10) wird von dem optischen Sensor (5) erfasst,
• ein Ausstiegen einer Person aus dem Fahrzeug (10) wird von dem optischen Sensor (5) erfasst, und
• ein Annähern von dem Objekt bis auf einen vorbestimmten Abstand an einen Griff (3; 4) des Schließelements (1; 2) und ein zeitgleiches Annähern eines weiteren Objekts an einen Griff (4; 3) eines weiteren Schließelements (2; 1) des Fahrzeugs (10) werden von dem optischen Sensor (5) erfasst.

6. Verfahren nach einem der vorhergehenden Ansprüche, **dadurch gekennzeichnet, dass** das Schließelement (1; 2) automatisch geschlossen wird, wenn mit dem optischen Sensor (5) erfasst wird, dass sich außerhalb des Fahrzeugs (10) kein Objekt mehr in einem vorbestimmten Abstand von dem optischen Sensor (5) befindet.

7. Verfahren nach einem der vorhergehenden Ansprüche, **dadurch gekennzeichnet, dass** zumindest eine Information von einer Gruppe von Informationen mittels des optischen Sensors (5) bei der automatischen Betätigung des Schließelements (1; 2) ermittelt wird, wobei die Gruppe umfasst:
• ein Öffnungsgrad des Schließelements (1; 2),
• eine Information darüber, ob sich das Schließelement (1; 2) in einer Endlage befindet, und
• eine Geschwindigkeit, mit welcher sich das Schließelement (1; 2) bewegt.

8. Verfahren nach einem der vorhergehenden Ansprüche, **dadurch gekennzeichnet, dass** das Schließelement eine Fahrertür, eine Beifahrertür (2), eine Schiebetür (1) oder eine Klappe umfasst.

9. Vorrichtung zum automatischen Betätigen eines Schließelements (1; 2) eines Fahrzeugs (10),
wobei die Vorrichtung (9) Steuermittel (8) und einen optischen Sensor (5) umfasst, wobei der optische Sensor (5) zum Erfassen eines Objekts und zum Überprüfen, ob sich bei der Betätigung des Schließelements (1; 2) ein Hindernis in einer Bewegungsbahn des Schließelements (1; 2) befindet, ausgestaltet ist, und
wobei die Steuermittel (8) derart ausgestaltet sind, dass sie abhängig von der Erfassung des Objekts das Schließelement (1; 2) betätigen und das Betätigen des Schließelements (1; 2) unterbrechen, wenn der optische Sensor (5) ein Hindernis in der Bewegungsbahn des Schließelements (1; 2) erfasst,
**dadurch gekennzeichnet,**
**dass** die Vorrichtung (9) mittels des optischen Sensors (5) das Objekt in einem ersten Erfässungsbereich (7) erfasst,
**dass** die Vorrichtung (9) mit dem optischen Sensor (5) in einem zweiten Erfassungsbereich (6) überprüft, ob sich bei der Betätigung des Schließelements (1; 2) ein Hindernis in der Bewegungsbahn des Schließelements (1; 2) befindet, und
**dass** der erste Erfassungsbereich (7) und der zweite Erfassungsbereich (6) in unterschiedliche Richtungen orientiert sind.

10. Vorrichtung nach Anspruch 9, **dadurch gekennzeichnet, dass** die Vorrichtung (9) einen kapazitiven Sensor umfasst, welcher zur Unterstützung des optischen Sensors (5) bei dem Betätigen des Schließelements (1; 2) ausgestaltet ist.

11. Vorrichtung nach Anspruch 9 oder 10, **dadurch gekennzeichnet, dass** die Vorrichtung (9) zur Durchführung des Verfahrens nach einem der Ansprüche 1-8 ausgestaltet ist.

12. Fahrzeug mit einer Vorrichtung (9) nach einem der Ansprüche 9-11.

13. Fahrzeug nach Anspruch 12,
**dadurch gekennzeichnet,**
**dass** das Schließelement eine Schiebetür (1) ist, welche von der B-Säule des Fahrzeugs (10) begrenzt ist,
**dass** der optische Sensor (5) an einem Rand der Schiebetür (1) angeordnet ist, welcher sich bei geschlossener Schiebetür (1) direkt neben der B-Säule befindet, und
**dass** ein Erfassungsbereich (6) des optischen Sensors (5) bei geöffneter Schiebetür (1) einen Bereich von dem Rand der Schiebetür (1) bis zur B-Säule überstreicht.

## Claims

1. Method for automatically actuating a closing element (1; 2) of a vehicle (10),
wherein an object is detected by means of an optical sensor (5),
wherein the closing element (1; 2) is actuated as a function of the detection of the object,
wherein with the optical sensor (5) it is checked whether an obstacle is located in a movement path of the closing element (1; 2) during the actuation of the closing element (1; 2), and
wherein the actuation of the closing element (1; 2) is interrupted if the optical sensor (5) detects an obstacle in the movement path of the closing element (1; 2),
**characterized**
**in that** the object is detected in a first detection range (7) by means of the optical sensor (5),
**in that** with the optical sensor it is checked in a second detection range (6) whether an obstacle is located in the movement path of the closing element (1; 2) during the actuation of the closing element (1; 2), and
**in that** the first detection range (7) and the second detection range (6) are oriented in different directions.

2. Method according to one of the preceding claims, **characterized in that** the closing element (1; 2) is actuated only if a vehicle key which is assigned to the vehicle (10) is detected at the same time in a surrounding region of the vehicle (10).

3. Method according to Claim 2, **characterized in that** it is checked whether the key which is assigned to the vehicle (10) is detected when it is detected with the optical sensor (5) that the object has approached a handle (3, 4) of the closing element (1; 2) up to a predetermined distance.

4. Method according to one of the preceding claims **characterized in that** the closing element (1; 2) is opened automatically if at least one of the following conditions is met:
• a handle (3; 4) of the closing element (1; 2) is touched,
• a wiping gesture is detected by the optical sensor (5), and
• a person is detected standing in front of the closing element (1; 2) by the optical sensor (5) over a predetermined time period.

5. Method according to one of the preceding claims, **characterized in that** the actuation of the closing element (1; 2) is interrupted if at least one of the following conditions is met:
• a person who passes the closing element (1; 2) at a shorter distance than a predetermined distance is detected by the optical sensor (5),
• a person climbing into the vehicle (10) is detected by the optical sensor (5),
• a person exiting the vehicle (10) is detected by the optical sensor (5), and
• the object approaching a handle (3; 4) of the closing element (1; 2) up to a predetermined distance and at the same time a further object approaching a handle (4; 3) of a further closing element (2; 1) of the vehicle (10) are detected by the optical sensor (5).

6. Method according to one of the preceding claims, **characterized in that** the closing element (1; 2) is closed automatically if it is detected with the optical sensor (5) that there is no longer an object outside the vehicle (10) at a predetermined distance from the optical sensor (5).

7. Method according to one of the preceding claims, **characterized in that** at least one information item from a group of information items is determined by means of the optical sensor (5) during the automatic actuation of the closing element (1; 2), wherein the group comprises:
• a degree of opening of the closing element (1; 2),
• information as to whether the closing element (1; 2) is located in an end position,
• a speed with which the closing element (1; 2) moves.

8. Method according to one of the preceding claims, **characterized in that** the closing element comprises a driver's door, a front seat passenger's door (2), a sliding door (1) or a flap.

9. Device for automatically actuating a closing element (1; 2) of a vehicle (10),
wherein the device (9) comprises control means (8) and an optical sensor (5), wherein the optical sensor (5) is configured to detect an object and to check whether an obstacle is located in a movement path of the closing element (1; 2) during the actuation of the closing element (1; 2), and
wherein the control means (8) are configured in such a way that they actuate the closing element (1; 2) as a function of the detection of the object, and interrupt the actuation of the closing element (1; 2) if the optical sensor (5) detects an obstacle in the movement path of the closing element (1; 2),
**characterized**
**in that** the device (9) detects the object in a first detection range (7) by means of the optical sensor (5), in that the device (9) checks in a second detection range (6), with the optical sensor (5), whether an obstacle is located in the movement path of the closing element (1; 2) during the actuation of the closing element (1; 2), and
**in that** the first detection range (7) and the second detection range (6) are oriented in different directions.

10. Device according to Claim 9, **characterized in that** the device (9) comprises a capacitive sensor which is configured to assist the optical sensor (5) during the actuation of the closing element (1; 2).

11. Device according to Claim 9 or 10, **characterized in that** the device (9) is configured to carry out the method according to one of Claims 1 - 8.

12. Vehicle comprising a device (9) according to one of Claims 9 - 11.

13. Vehicle according to Claim 12,
**characterized**
**in that** the closing element is a sliding door (1) which is bounded by the B pillar of the vehicle (10),
**in that** the optical sensor (5) is arranged at an edge of the sliding door (1) which is located directly next to the B pillar when the sliding door (1) is closed, and
**in that** a detection range (6) of the optical sensor (5) when the sliding door (1) is opened co-incides with a region of the edge of the sliding door (1) as far as the B pillar.

## Revendications

1. Procédé d'actionnement automatique d'un élément de fermeture (1 ; 2) d'un véhicule automobile (10), dans lequel un objet est détecté au moyen d' un capteur optique (5),
dans lequel l'élément de fermeture (1 ; 2) est actionné en fonction de la détection de l'objet,
dans lequel il est vérifié à l'aide du capteur optique (5) si un obstacle se trouve sur le trajet de déplacement de l'élément de fermeture (1 ; 2) lors de l'actionnement de l'élément de fermeture (1 ; 2), et dans lequel l'actionnement de l'élément de fermeture (1 ; 2) est interrompu lorsque le capteur optique (5) détecte un obstacle sur le trajet de déplacement de l'élément de fermeture (1 ; 2),
**caractérisé**
**en ce que** l'objet est détecté dans une première zone de détection (7) au moyen du capteur optique (5),
**en ce qu'**il est vérifié à l'aide du capteur optique dans une seconde zone de détection (6) si un obstacle se trouve sur le trajet de déplacement de l'élément de fermeture (1 ; 2) lors de l'actionnement de l'élément de fermeture (1 ; 2), et
**en ce que** la première zone de détection (7) et la seconde zone de détection (6) sont orientées dans des directions différentes.

2. Procédé selon l'une quelconque des revendications précédentes, **caractérisé en ce que** l'élément de fermeture (1 ; 2) n'est actionné que lorsqu'une clé d'automobile associée au véhicule automobile (10) est détectée dans une zone avoisinante du véhicule automobile (10).

3. Procédé selon la revendication 2, **caractérisé en ce qu'**il est vérifié si la clé associée au véhicule automobile (10) est détectée lorsqu'il est détecté à l'aide du capteur optique (5) que l'objet s'est rapproché jusqu'à une distance prédéterminée d'une poignée (3 ; 4) de l'élément de fermeture (1 ; 2).

4. Procédé selon l'une quelconque des revendications précédentes, **caractérisé en ce que** l'élément de fermeture (1 ; 2) est automatiquement ouvert lorsqu'au moins l'une des conditions suivantes est satisfaite :
- une poignée (3 ; 4) de l'élément de fermeture (1 ; 2) est touchée,
- un geste de glissement est détecté par le capteur optique (5), et
- une personne se tenant debout pendant plus d'une période de temps prédéterminée est détectée devant l'élément de fermeture (1 ; 2) par le capteur optique (5).

5. Procédé selon l'une quelconque des revendications précédentes, **caractérisé en ce que** l'actionnement de l'élément de fermeture (1 ; 2) est interrompu lorsqu'au moins l'une des conditions suivantes est satisfaite :
- une personne qui passe à proximité de l'élément de fermeture (1 ; 2) à une distance inférieure à une distance prédéterminée est détectée par le capteur optique (5),
- une entrée d'une personne dans le véhicule automobile (10) est détectée par le capteur optique (5),
- une sortie d'une personne du véhicule automobile (10) est détectée par le capteur optique (5), et
- un rapprochement de l'objet jusqu'à une distance prédéterminée d'une poignée (3 ; 4) de l'élément de fermeture (1 ; 2) et un rapprochement simultané d'un autre objet d'une poignée (4 ; 3) d'un autre élément de fermeture (2 ; 1) du véhicule automobile (10) sont détectés par le capteur optique (5).

6. Procédé selon l'une quelconque des revendications précédentes, **caractérisé en ce que** l'élément de fermeture (1 ; 2) est automatiquement fermé lorsqu'il est détecté à l'aide du capteur optique (5) que plus aucun objet ne se trouve à une distance prédéterminée du capteur optique (5) à l'extérieur du véhicule automobile (10).

7. Procédé selon l'une quelconque des revendications précédentes, **caractérisé en ce qu'**au moins une information appartenant à un groupe d'informations est obtenue au moyen du capteur optique (5) lors de l'actionnement automatique de l'élément de fermeture (1 ; 2), ledit groupe comprenant :
- un degré d'ouverture de l'élément de fermeture (1 ; 2),
- une information indiquant si l'élément de fermeture (1 ; 2) se trouve à une position finale, et
- une vitesse à laquelle l'élément de fermeture (1 ; 2) se déplace.

8. Procédé selon l'une quelconque des revendications précédentes, **caractérisé en ce que** l'élément de fermeture est une porte de conducteur, une porte de passager (2), une porte coulissante (1) ou un hayon.

9. Procédé d'actionnement automatique d'un élément de fermeture (1 ; 2) d'un véhicule automobile (10), dans lequel le dispositif (9) comprend des moyens de commande (8) et un capteur optique (5),
dans lequel le capteur optique (5) est conçu pour détecter un objet et pour vérifier si un obstacle se trouve sur un trajet de déplacement de l'élément de fermeture (1 ; 2) lors de l'actionnement de l'élément de fermeture (1 ; 2), et
dans lequel les moyens de commande (8) sont conçus pour actionner l'élément de fermeture (1 ; 2) en fonction de la détection de l'objet et pour interrompre l'actionnement de l'élément de fermeture (1 ; 2) lorsque le capteur optique (5) détecte un obstacle sur le trajet de déplacement de l'élément de fermeture (1 ; 2),
**caractérisé**
**en ce que** le dispositif (9) détecte l'objet dans une première zone de détection (7) au moyen du capteur optique (5),
**en ce que** le dispositif (9) vérifie à l'aide du capteur optique (5) dans une seconde zone de détection (6) si un obstacle se trouve sur le trajet de déplacement de l'élément de fermeture (1 ; 2) lors de l'actionnement de l'élément de fermeture (1 ; 2), et
**en ce que** la première zone de détection (7) et la seconde zone de détection (6) sont orientées dans des directions différentes.

10. Dispositif selon la revendication 9, **caractérisé en ce que** le dispositif (9) comprend un capteur capacitif qui est conçu pour servir d'appoint au capteur optique (5) lors de l'actionnement de l'élément de fermeture (1 ; 2).

11. Procédé selon la revendication 9 ou 10, **caractérisé en ce que** le dispositif (9) est conçu pour mettre en oeuvre le procédé selon l'une quelconque des revendications 1 - 8.

12. Véhicule automobile comportant un dispositif (9) selon l'une quelconque des revendications 9 - 11.

13. Véhicule automobile selon la revendication 12, **caractérisé**
**en ce que** l'élément de fermeture est une porte coulissante (1) qui est limitée par le pilier central du véhicule automobile (10),
**en ce que** le capteur optique (5) est disposé sur un rebord de la porte coulissante (1), lequel rebord est directement adjacent au pilier central lorsque la porte coulissante (1) est fermée, et
**en ce qu'**une zone de détection (6) du capteur optique (5) couvre une zone allant du rebord de la porte coulissante (1) au pilier central lorsque la porte coulissante (1) est ouverte.
